# EUROPEAN PATENT SPECIFICATION

(11) **EP 4 222 023 B1**
(45) Date of publication and mention of the grant of the patent: **03.09.2025**
(21) Application number: 21876502.2
(22) Date of filing: 30.09.2021
(51) Int. Cl.: B60R 7/04, A47C 7/62, A47C 7/68, B60N 2/75, B60N 3/10, B60N 3/12, B60R 7/00

(54) **VEHICLE INTERIOR COMPONENT**
FAHRZEUGINNENAUSSTATTUNGSTEIL
COMPOSANT D'INTÉRIEUR DE VÉHICULE

(30) Priority: 01.10.2020 US 202063086319 P
(43) Date of publication of application: 09.08.2023
(73) Proprietor: Shanghai Yanfeng Jinqiao Automotive Trim Systems Co. Ltd, Novi, MI 48377 (US)
(72) Inventor: ANDERSON, Rick Alan, Grand Haven, Michigan 49417 (US); GOFTON, Adam R., West Olive, Michigan 49460 (US)
(74) Representative: Trinks, Ole
(86) International application number: PCT/US2021/052940
(87) International publication number: WO 2022/072679

(56) References cited:
- WO-A1-2020/041292
- KR-U- 20150 003 218
- KR-U- 20150 003 218
- US-A- 6 019 334
- US-A1- 2017 036 584
- US-A1- 2017 036 584
- US-A1- 2020 071 984
- US-A1- 2020 071 984
- US-A1- 2020 101 881

## Description

### FIELD

The present invention relates to a component for a vehicle interior.

### BACKGROUND

It is known to provide a vehicle interior component including a base and a cover with a first door and/or second door movable relative to the base between a closed position and an open position. WO2020041292A shows a vehicle interior component according to the preamble of claim 1.

It would be advantageous to provide an improved vehicle interior component comprising a base and a cover comprising a first door and a second door coupled by a link and in which the first door is movable relative to the base between a closed position and an open position and the second door is movable relative to the base between a closed position and an open position.

It would be advantageous to provide an improved vehicle interior component comprising a base and a cover comprising a first door and a second door coupled by a link mechanism and in which the first door is movable relative to the base between a closed position and an open position and the second door is movable relative to the base between a closed position and an open position in which the link is configured for a coupled state to couple movement of the first door and the second door and a decoupled state to allow movement of the first door independent of the second door.

### SUMMARY

The present invention relates to a vehicle interior component with the features of claim 1. Other variants are defined in the dependent claims 2-9.

### FIGURES

FIGURE 1A is a schematic perspective view of a vehicle according to an exemplary embodiment.
FIGURE 1B is a schematic perspective view of a vehicle showing a vehicle interior according to an exemplary embodiment.
FIGURE 2A is a schematic perspective view of a vehicle interior component according to an exemplary embodiment.
FIGURE 2B is a schematic perspective view of a vehicle interior component according to an exemplary embodiment.
FIGURE 2C is a schematic perspective view of a vehicle interior component according to an exemplary embodiment.
FIGURE 2D is a schematic perspective view of a vehicle interior component according to an exemplary embodiment.
FIGURES 3A to 3C are schematic perspective views of a vehicle interior component according to an exemplary embodiment.
FIGURES 3D to 3F are schematic perspective views of a vehicle interior component according to an exemplary embodiment.
FIGURES 3G to 3I are schematic perspective views of a vehicle interior component according to an exemplary embodiment.
FIGURE 4 is a schematic partial perspective view of a vehicle interior component according to an exemplary embodiment.
FIGURE 5 is a schematic exploded perspective view of a vehicle interior component according to an exemplary embodiment.
FIGURE 6 is a schematic exploded partial perspective view of a vehicle interior component according to an exemplary embodiment.
FIGURES 7A to 7C are schematic partial perspective views of a vehicle interior component according to an exemplary embodiment.
FIGURES 8A to 8C are schematic partial perspective views of a vehicle interior component according to an exemplary embodiment.
FIGURES 9A to 9B are schematic partial perspective views of a vehicle interior component according to an exemplary embodiment.
FIGURES 10A to 10B are schematic partial perspective views of a vehicle interior component according to an exemplary embodiment.
FIGURES 11A to 11C are schematic partial section views of a vehicle interior component according to an exemplary embodiment.
FIGURE 12 a schematic partial section view of a vehicle interior component according to an exemplary embodiment.
FIGURES 13A to 13C are schematic partial section views of a vehicle interior component according to an exemplary embodiment.
FIGURES 14A to 14C are schematic partial section views of a vehicle interior component according to an exemplary embodiment.
FIGURES 15A to 15C are schematic partial section views of a vehicle interior component according to an exemplary embodiment.
FIGURE 16A is a schematic exploded partial section view of a vehicle interior component according to an exemplary embodiment not according to the invention.
FIGURE 16B is a schematic exploded partial section view of a vehicle interior component according to an exemplary embodiment not according to the invention.
FIGURES 17A to 17C are schematic partial section views of a vehicle interior component according to an exemplary embodiment not according to the invention.

### DESCRIPTION

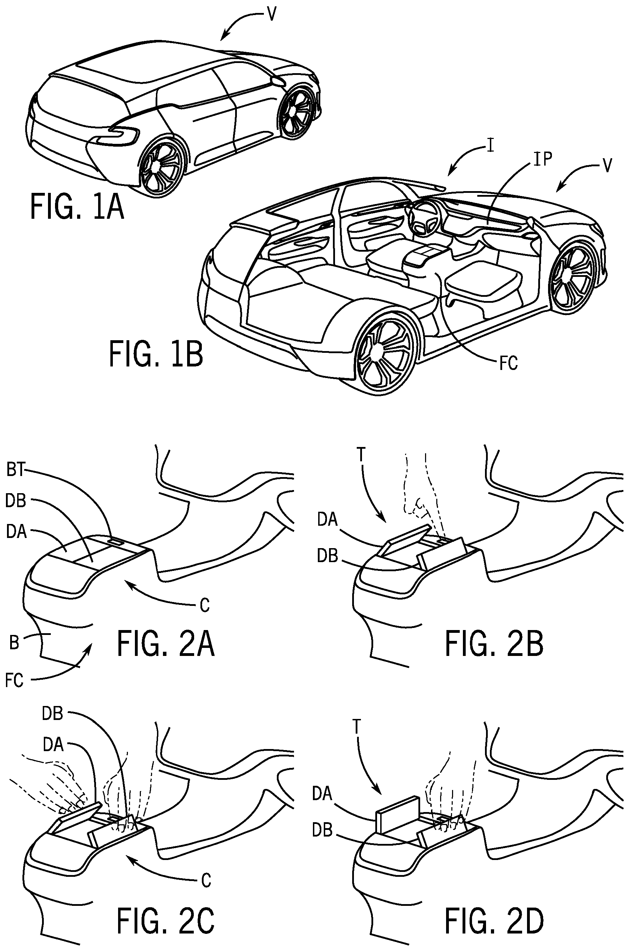

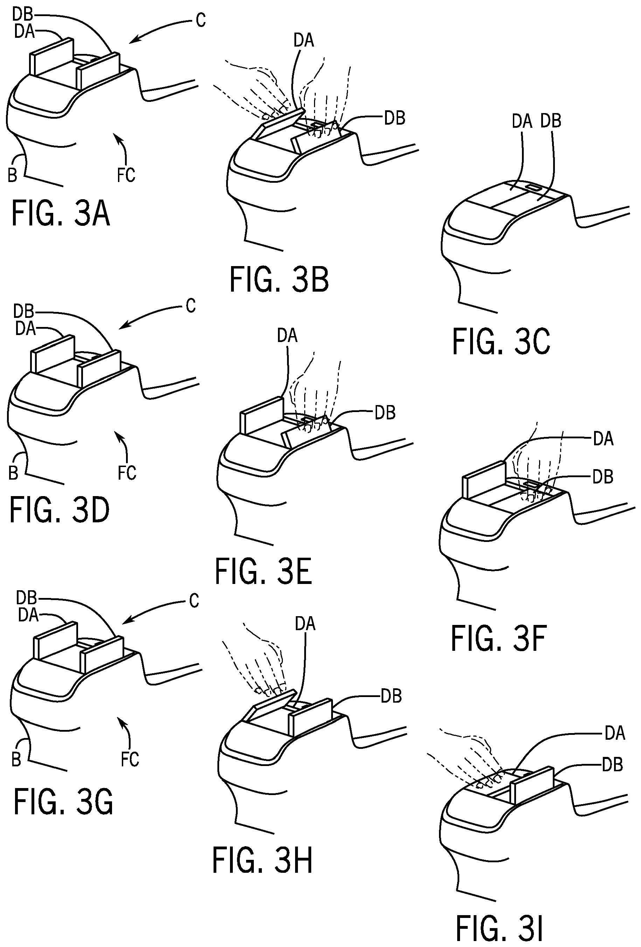

Referring to FIGURES 1A-1B and 2A-2D, a vehicle V with an interior I comprising components C such a floor console FC and instrument panel IP is shown schematically according to an exemplary embodiment. As shown schematically in FIGURES 2A-2D and 3A-3I, component C shown as floor console FC comprises a base B and a cover T with doors DA and DB moveable relative to base B between a closed position and an open position (i.e. to allow access to a compartment within the base).

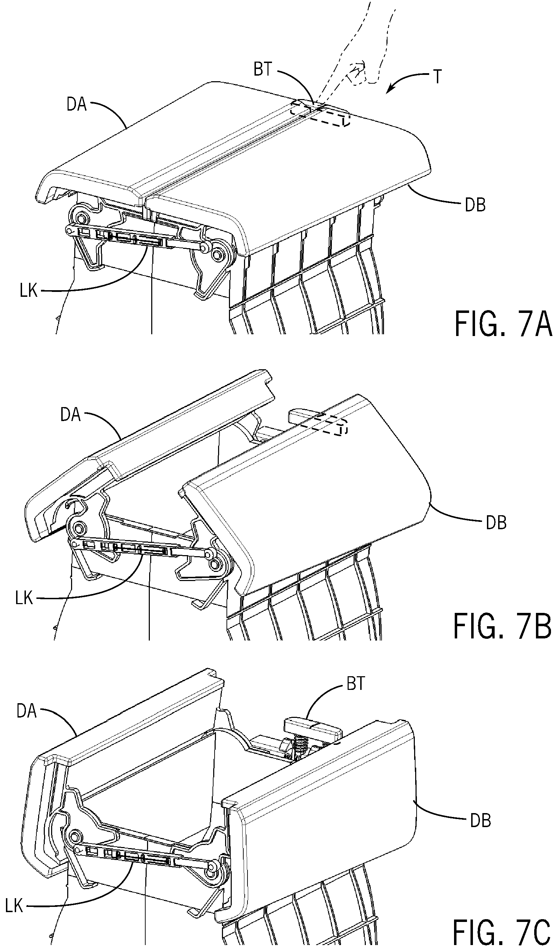

As indicated schematically according to an exemplary embodiment in FIGURES 2A-2D, 3A-3I and 4, component C may comprise a mechanism/release shown as latch LT actuated by an operator control shown as button BT for a vehicle occupant; when the cover is in a closed state with doors DA and DB in the closed position actuation of button BT (i.e. by a vehicle occupant) may release the latch LT and allow doors DA and DB to move to the open position with the cover in an open state under a force provided by a spring arrangement SP operating to rotate each of doors DA and DB at a pivot joint JT; doors DA and DB may be coupled at a connection point CL by a link mechanism shown as comprising a link LK. See also FIGURES 7A-7C, 11A-11C, 14A and TABLE A.

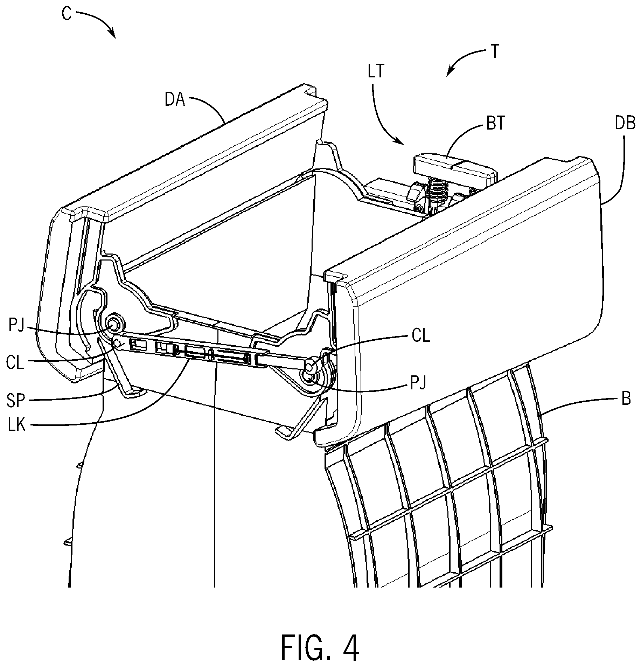

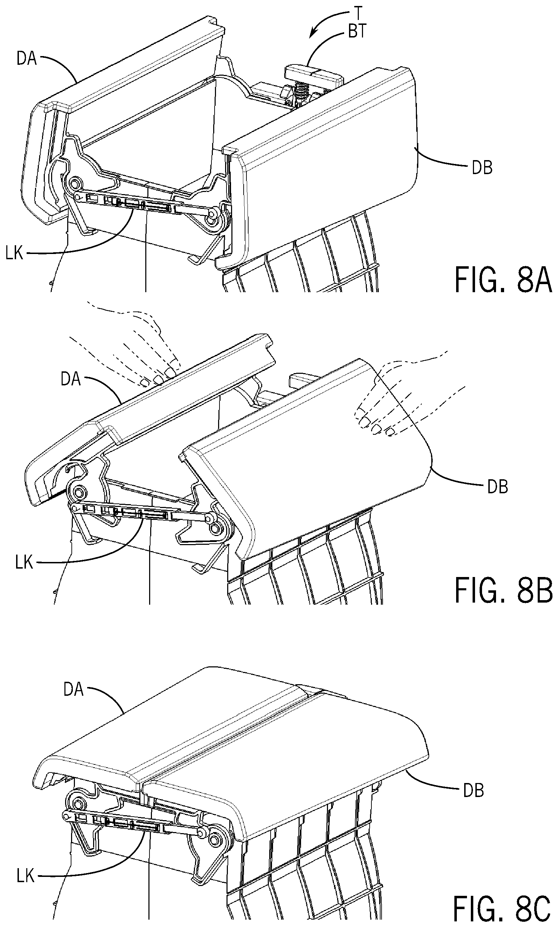

As indicated schematically in FIGURES 2C and 3A-3C, when cover T is in the open state both doors DA and DB may be moved together from the open position to the closed position to put the cover into the closed state (with both doors in the closed position). See also FIGURES 4, 8A-8C, 13A-13C, 14A and TABLE A.

As indicated schematically in FIGURES 2D and 3D-3I, when the cover is in the open state each door DA or DB may be moved independently from the open position to the closed position to put the cover into a partially open state (with one door in the open position and one door in the closed position). See also FIGURES 4, 9A-9B, 10A-10B, 14B-14C and TABLE A.

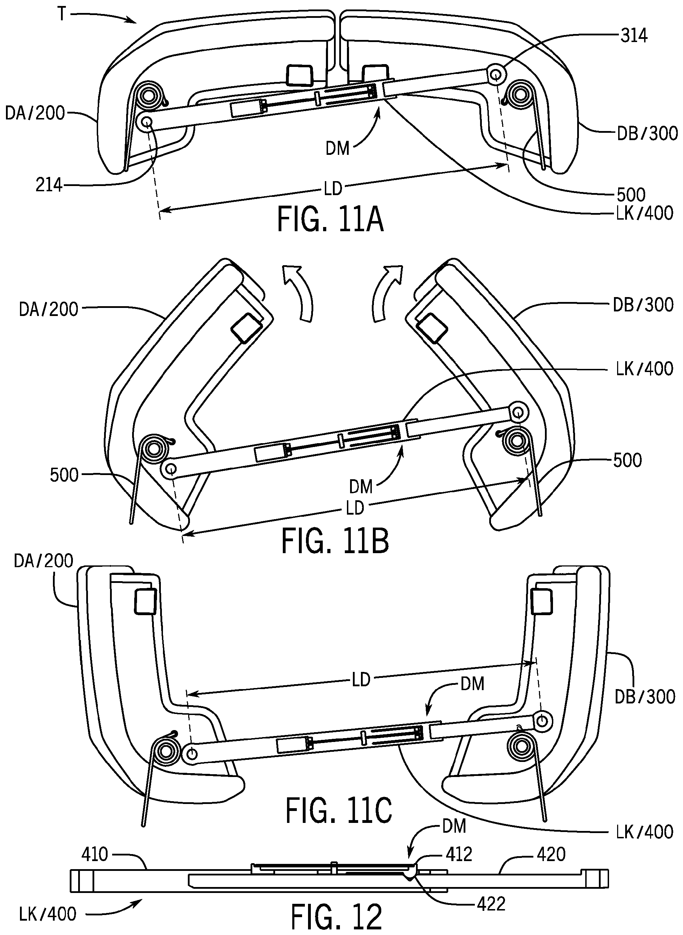

As indicated schematically according to an exemplary embodiment in FIGURES 4, 5 and 6, the link mechanism may comprise link LK with a set of link members LM configured to couple door DA to door DB at connection points CL to provide an effective length for link LK (i.e. distance between the connection points to each door). As indicated schematically in FIGURES 4, 5, 6, 14A-14C and 15A-15C, the link mechanism with link LK may comprise a detent mechanism DM (e.g. comprising a projection to engage an indentation such as a notch) to retain the effective length of link LK in a default length DL; link members LM of link LK may be configured to flex and/or move so that the effective length of link LK may be provided in a non-default length comprising an extended length LE and/or a retracted length LR. See also FIGURES 11A-11C, 12, 13A-13C and TABLE A.

| **TABLE A** | | | | |
|---|---|---|---|---|
| **LINK LENGTH FOR COVER STATE/DOOR POSITION** | | | | |
| **COVER (T) STATE** | **EFFECTIVE LENGTH OF LINK (LK)** | **FIRST DOOR (DA) POSITION** | **SECOND DOOR (DB) POSITION** | **EXAMPLE FIGURES** |
| Open State | Default length LD | Open | Open | FIGURES 3A, 3D, 3G, 4, 7C, 8A, 9A, 10A, 11C, 13A, 14A. 15A |
| First Partially Open State | Retracted length LR | Open | Closed | FIGURES 3F, 9B, 14B, 15B |
| Second Partially Open State | Extended length LE | Closed | Open | FIGURES 3I, 10B, 14C, 15C |
| Closed State | Default length LD | Closed | Closed | FIGURES 2A, 3C, 7A, 8C, 11A, 12, 13C |

As indicated schematically in FIGURES 2C, 3A-3C, 8A-8C, 13A-13C, 14A and 15A, when cover T is in the open state both doors DA and DB may be moved together from the open position to the closed position (e.g. by manual operation of a vehicle operator) with link LK retained at the default length LD to put the cover into the closed state (with both doors in the closed position). See also FIGURE 4 and TABLE A.

As indicated schematically in FIGURES 3D-3F, 9A-9B, 14B and 15B, when cover T is in the open state door DA may be moved independently from the open position to the closed position (e.g. by manual operation of a vehicle operator) to put the cover into a first partially open state with door DA in the open position and door DB in the closed position with link LK in a non-default length shown as retracted length LR (e.g. by relative movement of link members LM and disengagement of the detent mechanism DM on the link LK). See also FIGURE 4 and TABLE A. As indicated schematically in the FIGURES and TABLE A, the cover may be transitioned from the first partially open state to the closed state by movement of door DB from the open position to the closed position; link LK is then returned from the retracted length LR to the default length LD with re-engagement of detent mechanism DM. See FIGURES 2A, 11A, 12 and TABLE A.

As indicated schematically in FIGURES 3G-3I, 10A-10B, 14C and 15C, when cover T is in the open state door DB may be moved independently from the open position to the closed position (e.g. by manual operation of a vehicle occupant) to put the cover into a second partially open state with door DB in the open position and door DA in the closed position with link LK in a non-default length shown as extended length LE (e.g. by relative movement of link members LM and disengagement of the detent mechanism DM on the link LK). See also FIGURE 4 and TABLE A. As indicated schematically in the FIGURES and TABLE A, the cover can be put from the second partially open state to the closed state by movement of door DA from the open position to the closed position (e.g. by manual operation of a vehicle occupant); link LK is returned from extended length LE to default length LD with re-engagement of the detent mechanism DM. See FIGURES 2A, 11A, 12 and TABLE A.

According to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component C/1000/2000 may comprise a base B/100/2100 providing a compartment, a cover T movable relative to the base comprising a first door DA/200/2200 movable between a closed position and an open position and a second door DB/300/2300 movable between a closed position and an open position and a link LK/400/2400 comprising a length and configured to couple the first door and the second door.

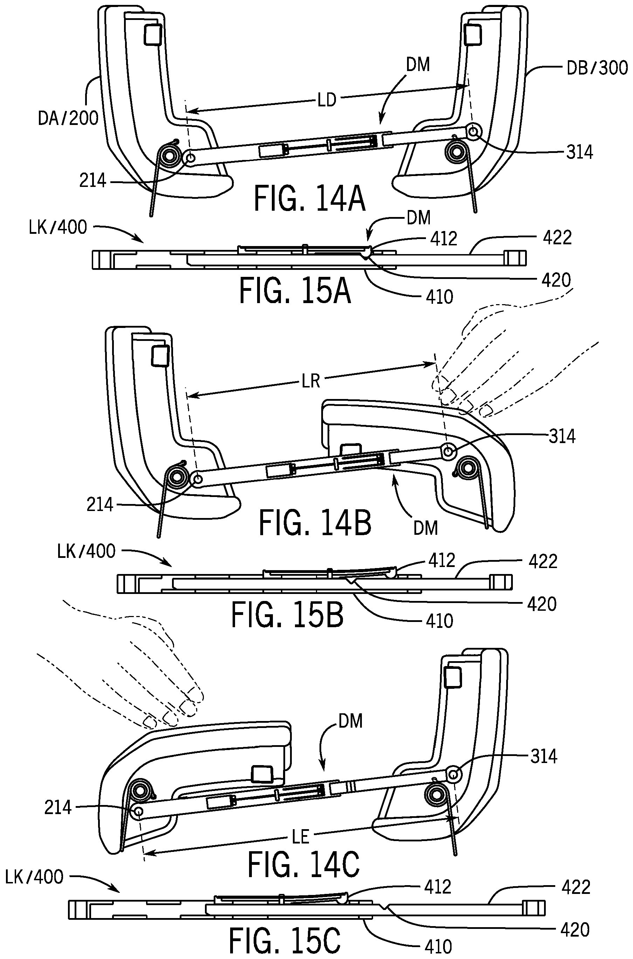

According to an exemplary embodiment as shown schematically in FIGURES 4, 5, 6, 11A-11C, 12 and TABLE A, a length of link LK for cover T may comprise an effective length between a coupling CL to first door DA and a coupling CL to second door DB. As shown schematically in FIGURES 11A-11C, 12, 14A and 15A and TABLE A, the effective length of link LK may comprise a default length LD to couple movement of first door DA with movement of second door DB. As shown schematically in FIGURES 14B-14C, 15B-15C and TABLE A, the effective length of link LK may comprise a non-default length shown as an extended length LE when first door DA is moved independently of second door DB; the effective length of link LK may comprise a non-default length shown as a retracted length LR when second door DB is moved independently of first door DA. As shown schematically in FIGURES 12, 14A-14C, 15A-15C and TABLE A, the non-default length of the link may comprise an extended length LE longer than the default length; the non-default length of the link may comprise a retracted length LR shorter than the default length.

As shown schematically in FIGURES 7A-7C, 8A-8C, 9A-9B, 10A-10B and TABLE A, movement of the cover relative to the base may comprise (1) an open state with the first door in the open position and the second door in the open position and (2) a first partially open state with the first door in the open position and the second door in the closed position and (3) a second partially open state with the first door in the closed position and the second door in the open position and (4) a closed state with the first door in the closed position and the second door in the closed position. See also FIGURES 2A-2I, 11A-11C, 13A-13C and 14A-14C. As shown schematically in FIGURES 4, 5, 11A, 12 and TABLE A, the effective length of the link may be the default length when the cover is in the closed state. As shown schematically in FIGURES 4, 5, 11C, 12, 14A and 15A, the effective length of the link may be the default length when the cover is in the open state. As shown schematically in FIGURES 14B and 15B, the effective length of the link may comprise a retracted length LR when the cover is in the first partially open state. As shown schematically in FIGURES 14C and 15C, the effective length of the link may comprise an extended length LE when the cover is in the second partially open state.

According to an exemplary embodiment as shown schematically in FIGURES 4, 5, 6, 11A-11C, 12, 13A-13C, 14A-14C and 15A-15C, component C may comprise a link mechanism comprising link LK; the link mechanism may comprise a detent mechanism DM configured to retain the default length of link LK. According to an exemplary embodiment as shown schematically in FIGURES 4, 5, 6 and 11A-11C, the component may comprise a spring arrangement SP configured to move cover T from the closed state to the open state; the spring arrangement may comprise a first spring for first door DA and a second spring for second door DB.

According to an exemplary embodiment as shown schematically in FIGURES 4, 5, 6, 7A-7C, 8A-8C, 9A-9B, 10A-10B, 14A-14C, 15A-15C, 16A-16B and 17A-17C, link LK may comprise a first member LM/410/2410 and a second member LM/420/2420 movable relative to the first member. As shown schematically in FIGURES 14C and 15C, second member LM may be configured to extend relative to first member LM. As shown schematically in FIGURES 14B and 15B, second member LM may be configured to retract relative to first member LM. As shown schematically in FIGURES 4, 5, 6, 12 and 15A-15C, the component may comprise a link mechanism comprising the link; the link mechanism may comprise a mechanism such as a detent mechanism DM comprising a recess 422/2422 and a protrusion 412/2412; the link mechanism may comprise an indentation on the link; the link mechanism may comprise a notch shown as recess 422/2422 and a projection shown as protrusion 412/2412. As shown schematically in FIGURES 12 and 15A, detent mechanism DM may be engaged with the projection seated in the notch when the effective length of the link is the default length LD.

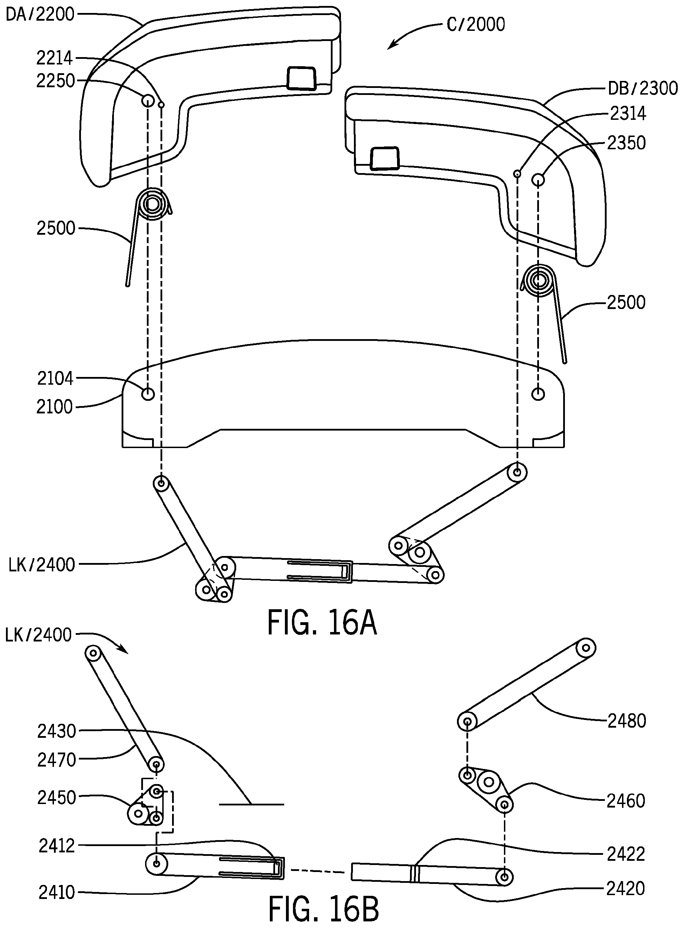

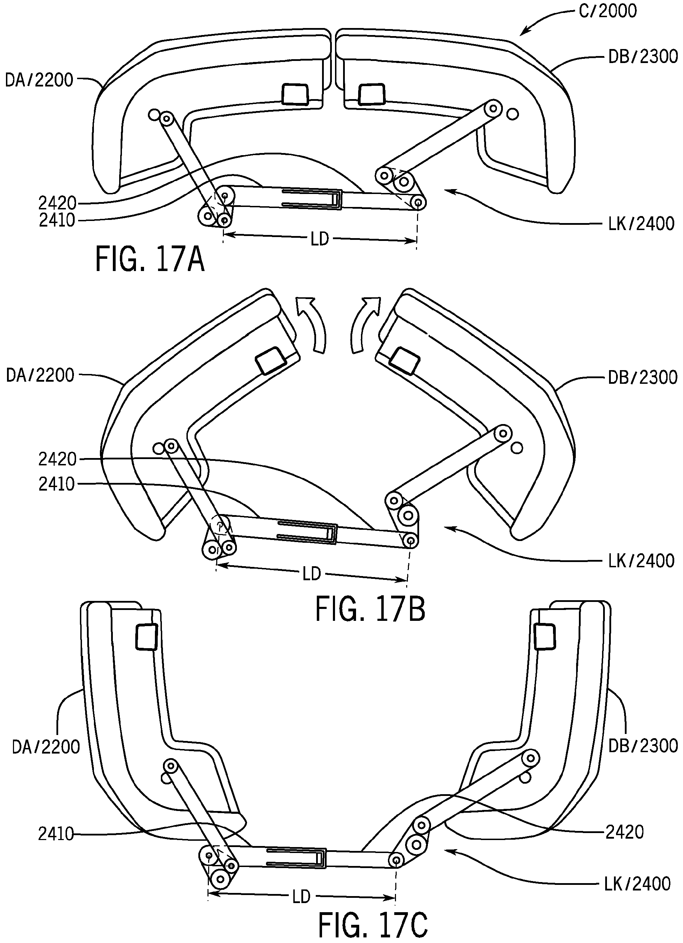

As shown schematically in FIGURES 4, 5, 6, 12, 15A-15C, link LK may comprise a first member LM/410/2410 and a second member LM/420/2420 movable relative to the first member; the notch may be on the first member and the projection may be on the second member. See also FIGURES 16A-16B and 17A-17C. The link may comprise a first member LM/410/2410 and a second member LM/420/2420 movable relative to the first member; the first member may comprise a notch shown as recess 422/2422 and the second member may comprise a projection shown as protrusion 412/2412. As indicated schematically in FIGURES 14B-14C, 15B-15C and TABLE A, the projection may be out of the notch when the first door moves relative to the second door; the projection may be configured to move out of the notch to facilitate relative movement of the first door and the second door. As shown schematically in FIGURES 11A-11C, 12, 14A and 15A, the projection may be seated in the notch when the effective length of the link is the default length. As indicated schematically in FIGURES 14B-14C, 15B-15C, the projection may be unseated from the notch when the effective length of the link is extended to an extended length LE; link LK may be flexed so that the projection is unseated from the notch when the effective length of the link is extended to an extended length LE; the projection may be unseated from the notch when the effective length of the link is retracted to a retracted length LR; the link may be flexed so that the projection is unseated from the notch when the effective length of the link is retracted to a retracted length LR.

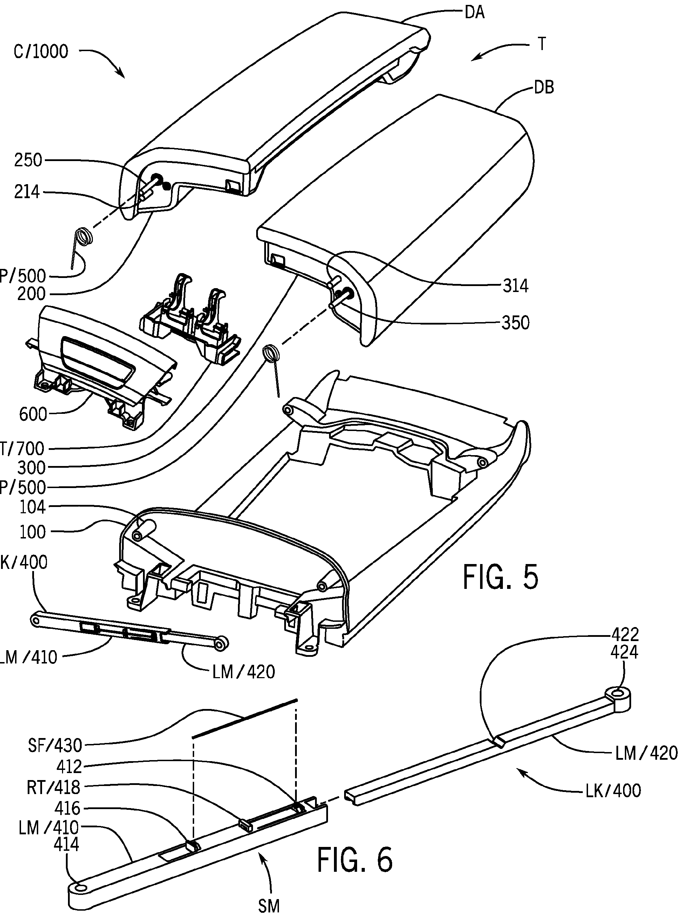

According to an exemplary embodiment as shown schematically in FIGURES 4, 5 and 6, link LK may comprise a first member LM and a second member LM. See also FIGURES 12 and 15A-15C. The first member may be a flexible member; the second member may be a flexible member. As shown schematically in FIGURES 5 and 6, the link may comprise a stiffener SF/430/2430; the stiffener may comprise a spring; the spring may comprise a bar.

As shown schematically in FIGURE 4, first door DA may be coupled to the base at a first pivot joint PJ and second door DB may be coupled to the base at a second pivot joint PJ; the link mechanism with link LK may comprise a connection to the first door offset from the first pivot joint and a connection to the second door offset from the second pivot joint. As indicated schematically in FIGURES 4, 5 and 6, the link may comprise a first member LM/410/2410 and a second member LM/420/2420 movable relative to the first member; the second member may be configured to slide relative to the first member. See also FIGURES 11A-11C, 12, 14A-14C, 15A-15C, 16A-16B and 17A-17C. As shown schematically in FIGURES 5 and 6, the component may comprise a link mechanism; the link mechanism may comprise a spring mechanism SM with a wire spring shown as stiffener SF/430/2430; the wire spring may be configured to stiffen the link; the link may comprise a first member LM/410/2410 and a second member LM/420/2420 movable relative to the first member; the first member may be configured to flex relative to the second member; the link may comprise a first member LM/410/2410 and a second member LM/420/2420 movable relative to the first member; the second member may be configured to flex relative to the first member. See also FIGURES 11A-11C, 12, 14A-14C and 15A-15C.

According to an exemplary embodiment as shown schematically in FIGURES 5 and 6, the component comprises a link mechanism comprising link LK; the link mechanism may comprise a cantilever arrangement. As shown schematically in FIGURES 5 and 6, the link mechanism of link LK comprises a tab 416 and a retainer RT/418 configured to engage to retain the effective length of the link in the default length. See also FIGURES 11A-11C, 12, 14A and 15A. The tab and the retainer are configured to disengage to allow the effective length of the link to move to a retracted length LR; the tab and the retainer are configured to disengage to allow the effective length of the link to move to an extended length LE. See also FIGURES 14B-14C, 15B-15C. The link is configured to flex at the tab and the retainer to disengage to allow the effective length of the link to be moved from the default length. The link may comprise a first member LM/410/2410 and a second member LM/420/2420 movable relative to the first member; the first member may comprise an arm and the second member may comprise an arm. As indicated schematically in FIGURES 14A-14C, 15A-15C and TABLE A, the link may be configured to couple movement of the first door from the closed position to the open position and the second door from the closed position to the open position and to decouple movement of the first door from the open position to the closed position and the second door from the open position to the closed position. See also FIGURES 16A-16B and 17A-17C.

According to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component C/1000/2000 may comprise a base B/100/2100 providing a compartment, a cover T movable relative to the base comprising a first door DA/200/2200 movable between a closed position and an open position and a second door DB/300/2300 movable between a closed position and an open position and a link LK/400/2400 configured to couple the first door and the second door. The link may be configured to couple movement of the first door and the second door from the closed position to the open position and to decouple movement of the first door and the second door from the open position to the closed position. The link may comprise a first arm shown as first member LM/410/2410 and a second arm shown as second member LM/420/2420; one of the first arm and the second arm may comprise a depression shown as recess 422/2422 and the other of the first arm and the second arm may comprise a protrusion 412/2412; the protrusion may be configured to engage the depression to couple the first arm and the second arm. At least one of the first arm and the second arm may be configured to flex to disengage the protrusion and the depression to enable the first arm and the second arm to move relative to one another.

According to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component C/1000/2000 may comprise a base B/100/2100 providing a compartment, a first door DA/200/2200 movable relative to the base between a closed position and an open position, a second door DB/300/2300 movable relative to the base between a closed position and an open position and a link LK/400/2400 coupled to the first door and the second door. As shown schematically in FIGURES 14A-14C, 15A-15C and TABLE A, the link may be configured for (a) a coupled state to couple movement of the first door and the second door and (b) a decoupled state to de-couple movement of the first door and the second door. See also FIGURES 16A-16B and 17A-17C. As shown schematically in FIGURES 5 and 6, link LK may comprise a first arm shown as first member LM/410/2410 and a second arm shown as second member LM/420/2420; the first arm may be coupled to the second arm to link movement of the first door and the second door; the first arm and the second arm may be configured to move relative to one another to de-couple movement of the first door and the second door. One of the first arm and the second arm may comprise a notch shown as recess 422/2422 and the other of the first arm and the second arm may comprise a projection shown as protrusion 412/2412; the projection may be configured to engage the notch to couple the first arm and the second arm; when an external force is applied to move the first door from the open position toward the closed position, at least one of the first arm and the second arm may be configured to flex to disengage the protrusion and the depression to enable the first arm and the second arm to move relative to one another.

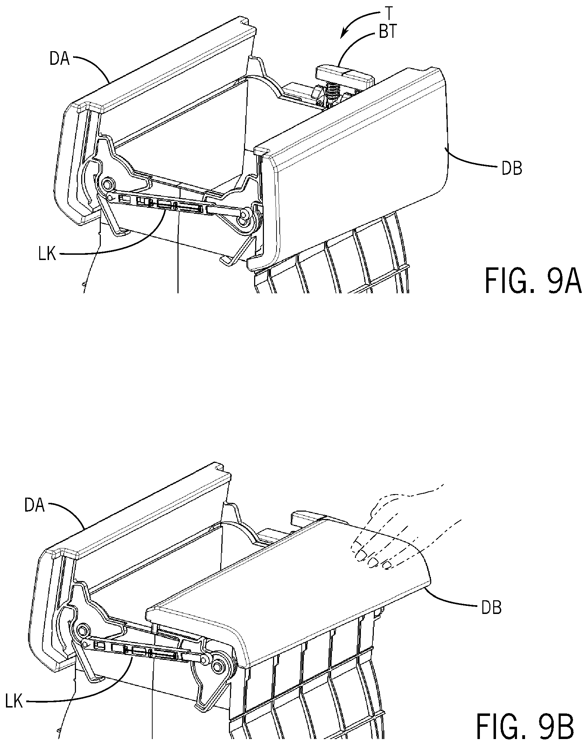

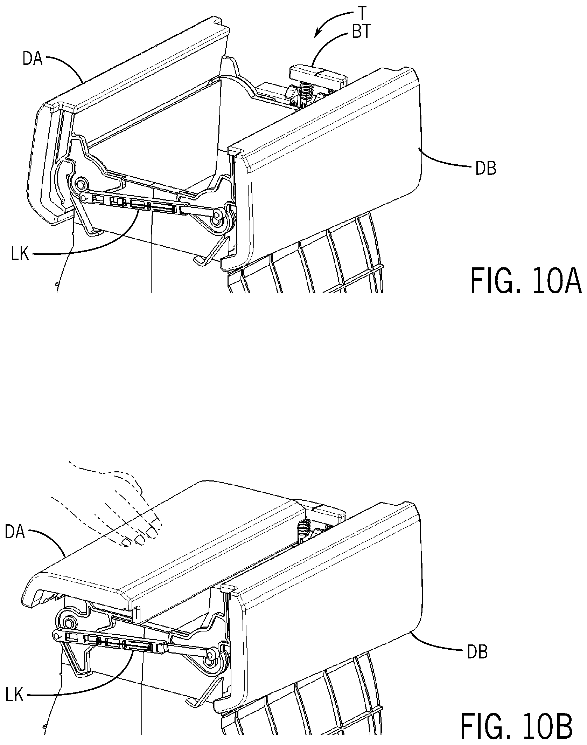

According to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component C/1000/2000 may comprise a base B/100/2100 providing a compartment, a cover T movable relative to the base comprising a first door DA/200/2200 movable between a closed position and an open position and a second door DB/300/2300 movable between a closed position and an open position and a link LK/400/2400 coupled to the first door and the second door. As shown schematically in FIGURES 4 and 5, link LK may be coupled to the first door at a first feature such as at connection CL (e.g. pivot coupling) and coupled to the second door at a second feature such as at connection CL (e.g. pivot coupling); the link may be configured to substantially maintain a distance between the feature of the first door and the feature of the second door as the first door moves from the closed position of the first door to the open position of the first door and the second door moves from the closed position of the second door to the open position of the second door. See FIGURES 14A-14C, 15A-15C, 16A-16B and 17A-17C. As shown schematically in FIGURES 5 and 6, link LK may comprise a first arm shown as first member LM/410/2410 and a second arm shown as second member LM/420/2420; the first arm may be coupled to the second arm to maintain the distance between the feature of the first door and the feature of the second door as the first door moves from the closed position of the first door to the open position of the first door and the second door moves from the closed position of the second door to the open position of the second door. The first arm and the second arm may be configured to move relative to one another to de-couple movement of the first door and the second door; one of the first arm and the second arm may comprise a notch shown as recess 422/2422 and the other of the first arm and the second arm may comprise a projection shown as protrusion 412/2412; the projection may be configured to engage the notch to couple the first arm and the second arm. As indicated schematically in FIGURES 9A-9B and 10A-10B, when an external force is applied to move the first door from the open position toward the closed position, at least one of the first arm and the second arm may be configured to flex to disengage the projection and the notch to enable the first arm and the second arm to move relative to one another. See also FIGURES 14A-14C and 15A-15C and TABLE A.

According to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component C/1000/2000 may comprise a base B/100/2100 providing a compartment, a cover T movable relative to the base comprising a first door DA/200/2200 movable between a closed position and an open position and a second door DB/300/2300 movable between a closed position and an open position and a link LK/400/2400 comprising an effective length. As shown schematically in FIGURES 14A-14C, 15A-15C and TABLE A, link LK may be configured to maintain the effective length to couple movement of first door DA and second door DB; the link may be configured to change the effective length to decouple movement of first door DA and second door DB. As shown schematically in FIGURES 4, 5, 6. 12 and 15A-15C, the component may comprise a link mechanism comprising link LK and a detent mechanism DM configured to engage to maintain the link in a default length LD and to disengage to allow the link to move to a non-default length; the link may comprise a first member LM/410/2410 and a second member LM/420/2420 movable relative to the first member; the non-default length may comprise movement of the second member LM relative to the first member LM to provide link LK in at least one of an extended length LE and/or a retracted length LR. See FIGURES 15A-15C.

### Exemplary Embodiments - A

According to an exemplary embodiment as shown in FIGURES 2A-2D and 3A-3I, vehicle interior component C/1000/2000 shown as a floor console FC may comprise a base B/100/2100, a first door DA and a second door DB. Vehicle interior component FC may be configured to be operated by application of an external force from an occupant shown as a hand. Base B may provide a compartment. First door DA may be movable relative to base B between a closed position as shown schematically in FIGURES 2A, 3C and 3I to at least partially cover the compartment and an open position as shown schematically in FIGURES 2D, 3A and 3D-3G to uncover the compartment. Second door DB may be movable relative to base B between a closed position as shown schematically in FIGURES 2A, 3C and 3F to at least partially cover the compartment and an open position as shown schematically in FIGURES 3A, 3D and 3G-3I. First door DA and second door DB may be configured for movement between (a) a first state with first door DA in the open position of first door DA and second door DB in the open position of second door DB as shown schematically in FIGURES 3A, 3D and 3G; (b) a second state with first door DA in the closed position of first door DA and second door DB in the open position of second door DB as shown schematically in FIGURE 3I; (c) a third state with first door DA in the open position of first door DA and second door DB in the closed position of second door DB as shown schematically in FIGURE 3F; (d) a fourth state with first door DA in the closed position of first door DA and second door DB in the closed position of second door DB as shown schematically in FIGURES 2A and 3C. First door DA may be configured to remain in the open position as second door DB moves from the open position to the closed position as shown schematically in FIGURES 2D, 3D-3F. Second door DB may be configured to remain in the open position as first door DA moves from the open position to the closed position as shown schematically in FIGURES 3G-3I. Vehicle interior component FC may be configured for (a) a coupled state to couple movement of first door DA and second door DB as shown schematically in FIGUREC 2A-2B and (b) a decoupled state to de-couple movement of first door DA and second door DB as shown schematically in FIGURES 2C, 2D, 3A-3I.

According to an exemplary embodiment as shown in FIGURE 5, vehicle interior component 1000 may comprise a base 100, a first door DA/200 and a second door DB/300. According to an exemplary embodiment, vehicle interior component 1000 may comprise a link LK/400. According to an exemplary embodiment, vehicle interior component 1000 may comprise a set of springs SP/500, an actuator or button BT/600 and a latch LT/700. Set of springs SP/500 may be configured to move first door DA/200 and second door DB/300 relative to base 100 between a closed position as shown schematically in FIGURE 11A to at least partially cover the compartment and an open position as shown schematically in FIGURE 11C to uncover the compartment. Button BT/600 may be configured to actuate latch LT/700 to move first door DA/200 and second door DB/300 relative to base 100 between a closed position as shown schematically in FIGURE 11A to at least partially cover the compartment and an open position as shown schematically in FIGURE 11C to uncover the compartment.

According to an exemplary embodiment as shown in FIGURE 5, base 100 may comprise a pivot or sleeve 104. First door DA/200 may comprise an attachment feature 214 and a pivot member 250. Second door DB/300 may comprise an attachment feature 314 and a pivot member 350.

According to an exemplary embodiment as shown in FIGURE 6, link LK/400 may comprise a first member LM/410 and a second member LM/420. One of first member LM/410 and second member LM/420 may comprise a projection 412, a feature or attachment feature 414, a tab 416 and a retainer RT/418. One of first member LM/410 and second member LM/420 may comprise a recess or notch 422 and a feature or attachment feature 424. Link LK/400 may comprise a spring or wire SF/430.

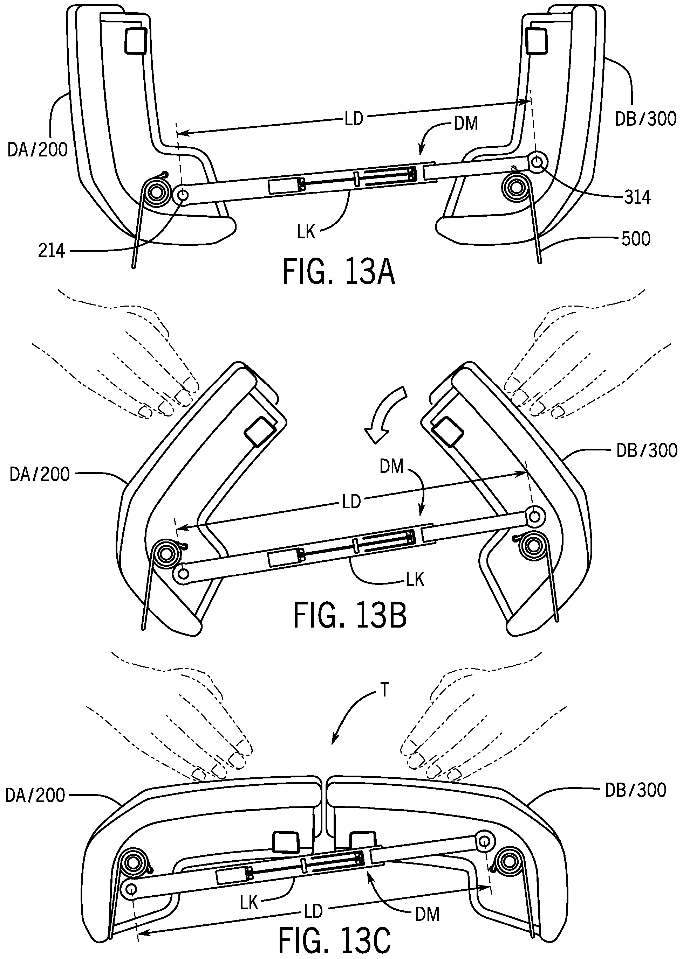

According to an exemplary embodiment as shown schematically in FIGURES 11A-11C, 12, 13A-13C, 14A-14C and 15A-15C, first door DA/200 may be movable relative to base 100 between a closed position as shown schematically in FIGURES 11A, 13C and 14C to at least partially cover a compartment and an open position as shown schematically in FIGURES 11C, 13A, 14A and 14B to uncover the compartment. Second door DB/300 may be movable relative to base 100 between a closed position as shown schematically in FIGURES 11A, 13C and 14B to at least partially cover a compartment and an open position as shown schematically in FIGURES 11C, 13A, 14A and 14C. First door DA/200 and second door DB/300 may be configured for movement between (a) a first state with first door DA/200 in an open position and second door DB/300 in an open position as shown schematically in FIGURES 11C, 13A and 14A; (b) a second state with first door DA/200 in a closed position and second door DB/300 in the open position as shown schematically in FIGURE 14C; (c) a third state with first door DA/200 in the open position and second door DB/300 in a closed position as shown schematically in FIGURE 14B; (d) a fourth state with first door DA/200 in the closed position and second door DB/300 in the closed position as shown schematically in FIGURES 11A and 13C. First door DA/200 may be configured to remain in the open position as second door DB/300 moves from the open position to the closed position as shown schematically in FIGURES 14A and 14B. Second door DB/300 may be configured to remain in the open position as first door DA/200 moves from the open position to the closed position as shown schematically in FIGURES 14A-14C. Vehicle interior component 1000 may be configured for (a) a coupled state to couple movement of first door DA/200 and second door DB/300 as shown schematically in FIGURES 11A-11C and (b) a decoupled state to de-couple movement of first door DA/200 and second door DB/300 as shown schematically in FIGURES 14A-14C.

According to an exemplary embodiment, link LK/400 of vehicle interior component 1000 may be configured to link movement of first door DA/200 and movement of second door DB/300 as shown schematically in FIGURES 11A-11C and 12. First member LM/410 may be configured to move relative to second member LM/420 to enable one of first door DA/200 and second door DB/300 to remain in the open position as the other of first door DA/200 and second door DB/300 moves from the open position to the closed position as shown schematically in FIGURES 14A-14C. One of first member LM/410 and second member LM/420 may comprise a recess 422 and the other of first member LM/410 and second member LM/420 may comprise a projection 412. Projection 412 may be configured to engage recess 422 to couple first member LM/410 and second member LM/420 as shown schematically in FIGURES 11A-11C and 12. At least one of first member LM/410 and second member LM/420 may be configured to flex to disengage projection 412 and recess 422 to enable first member LM/410 and second member LM/420 to move relative to one another as shown schematically in FIGURES 15B and 15C. According to an exemplary embodiment as shown schematically in FIGURES 13A-13C, first door DA/200 may move from the open position of first door DA/200 to the closed position of first door DA/200 in response to a first external force as second door DB/300 moves from the open position of second door DB/300 to the closed position of second door DB/300 in response to a second external force.

According to an exemplary embodiment as shown schematically in FIGURES 11A-11C, 12, 13A-13C, 14A-14C and 15A-15C, link LK/400 of vehicle interior component 1000 may couple to first door DA/200 at a first feature 214 and may couple to second door DB/300 at a second feature 314. Link LK/400 may be configured to substantially maintain a distance LD between feature 214 of first door DA/200 and feature 314 of second door DB/300 as first door DA/200 moves from a closed position to an open position and second door DB/300 moves from a closed position to an open position as shown schematically in FIGURES 11A-11C. First member LM/410 may be coupled to second member LM/420 to maintain distance LD between feature 214 of first door DA/200 and feature 314 of second door DB/300 as first door DA/200 moves from the closed position to the open position and second door DB/300 moves from the closed position to the open position as shown schematically in FIGURES 11A-11C and 12. First member LM/410 and second member LM/420 may be configured to move relative to one another to de-couple movement of first door DA/200 and second door DB/300 as shown schematically in FIGURES 14A-14C and 15A-15C. One of first member LM/410 and second member LM/420 may comprise recess 422 and the other of first member LM/410 and second member LM/420 may comprise projection 412. Projection 412 may be configured to engage recess 422 to couple first member LM/410 and second member LM/420 as shown schematically in FIGURES 11A-11C, 12 and 13A-13C. When an external force is applied to move first door DA/200 from the open position toward the closed position, at least one of first member LM/410 and second member LM/420 may be configured to flex to disengage projection 412 and recess 422 to enable first member LM/410 and second member LM/420 to move relative to one another as shown schematically in FIGURES 14A and 14C and 15A and 15C. As shown schematically in FIGURES 14A, 14C, 15A and 15C, link LK/400 may be configured to increase in length from LD to LE in response to movement of first door DA/200 from the open position toward the closed position to enable second door DB/300 to remain in the open position. As shown schematically in FIGURES 14A, 14B, 15A and 15B, link LK/400 may be configured to decrease in length from LD to LR in response to movement of second door DB/300 from the open position toward the closed position to enable first door DA/200 to remain in the open position.

According to an exemplary embodiment as shown schematically in FIGURES 11A-11C, 12, 13A-13C, 14A-14C and 15A-15C, link LK/400 may comprise a length LD. Link LK/400 may configured to maintain length LD to couple movement of first door DA/200 and second door DB/300 and link LK/400 may be configured to change from length LD to a length LE or a length LR to decouple movement of first door DA/200 and second door DB/300.

According to an exemplary embodiment as shown in FIGURE 16A, a vehicle interior component 2000 may comprise a base 2100, a first door DA/2200 and a second door DB/2300. According to an exemplary embodiment, vehicle interior component 2000 may comprise a link LK/2400. According to an exemplary embodiment, vehicle interior component 2000 may comprise a set of springs SP/2500. Set of springs SP/2500 may be configured to move first door DA/2200 and second door DB/2300 relative to base 2100 between a closed position as shown schematically in FIGURE 17A to at least partially cover the compartment and an open position as shown schematically in FIGURE 17C to uncover the compartment.

According to an exemplary embodiment as shown in FIGURE 16A, base 2100 may comprise a pivot or sleeve 2104. First door DA/2200 may comprise an attachment feature 2214 and a pivot member 2250. Second door DB/2300 may comprise an attachment feature 2314 and a pivot member 2350.

According to an exemplary embodiment as shown in FIGURE 16B, link LK/2400 may comprise a first member LM/2410, a second member 2420, a third member 2470, a fourth member 2480 and a spring or wire SF/2430. First member LM/2410 may comprise a projection 2412. Second member 2420 may comprise a recess 2422. Link LK/2400 may comprise a coupling 2450 configured to link first member LM/2410 and third member 2470. Coupling 2450 may be configured to facilitate relative movement or relative rotation of first member LM/2410 and third member 2470. Link LK/2400 may comprise a coupling 2460 configured to link second member 2420 and fourth member 2480. Coupling 2460 may be configured to facilitate relative movement or relative rotation of second member 2420 and fourth member 2480.

According to an exemplary embodiment as shown schematically in FIGURES 17A-17C, first door DA/2200 may be movable relative to base 2100 between a closed position as shown schematically in FIGURE 17A to at least partially cover a compartment and an open position as shown schematically in FIGURE 17C to uncover the compartment. Second door DB/2300 may be movable relative to base 2100 between a closed position as shown schematically in FIGURE 17A to at least partially cover a compartment and an open position as shown schematically in FIGURE 17C to uncover the compartment. First door DA/2200 and second door DB/2300 may be configured for movement between (a) a first state with first door DA/2200 in an open position and second door DB/2300 in an open position as shown schematically in FIGURE 17C; (b) a second state with first door DA/2200 in a closed position and second door DB/2300 in the open position; (c) a third state with first door DA/2200 in the open position and second door DB/2300 in a closed position; (d) a fourth state with first door DA/2200 in the closed position and second door DB/2300 in the closed position as shown schematically in FIGURE 17A. First door DA/2200 may be configured to remain in the open position as second door DB/2300 moves from the open position to the closed position. Second door DB/2300 may be configured to remain in the open position as first door DA/2200 moves from the open position to the closed position. Vehicle interior component 2000 may be configured for (a) a coupled state to couple movement of first door DA/2200 and second door DB/2300 as shown schematically in FIGURES 17A-17C and (b) a decoupled state to de-couple movement of first door DA/2200 and second door DB/2300.

According to an exemplary embodiment as shown schematically in FIGURES 16A-16B and 17A-17C, link LK/2400 of vehicle interior component 2000 may be configured to link movement of first door DA/2200 and movement of second door DB/2300 as shown schematically in FIGURES 17A-17C. First member LM/2410 may be configured to move relative to second member 2420 to enable one of first door DA/2200 and second door DB/2300 to remain in the open position as the other of first door DA/2200 and second door DB/2300 moves from the open position to the closed position. One of first member LM/2410 and second member 2420 may comprise a recess and the other of first member LM/2410 and second member 2420 may comprise a projection. The projection may be configured to engage the recess to couple first member LM/2410 and second member 2420 as shown schematically in FIGURES 17A-17C. At least one of first member LM/2410 and second member 2420 may be configured to flex to disengage the projection and the recess to enable first member LM/2410 and second member 2420 to move relative to one another. When an external force is applied to move first door DA/2200 from the open position toward the closed position, at least one of first member LM/2410 and second member 2420 may be configured to flex to disengage the projection and the recess to enable first member LM/2410 and second member 2420 to move relative to one another.

According to an exemplary embodiment as shown schematically in FIGURES 16A and 17A-17C, link LK/2400 of vehicle interior component 2000 may couple to first door DA/2200 at a first feature 2214 and may couple to second door DB/2300 at a second feature 2314. Link LK/2400 may be configured to substantially maintain a distance LD between feature 2214 of first door DA/2200 and feature 2314 of second door DB/2300 as first door DA/2200 moves from a closed position to an open position and second door DB/2300 moves from a closed position to an open position as shown schematically in FIGURES 17A-17C. First member LM/2410 and second member 2420 may be configured to move relative to one another to de-couple movement of first door DA/2200 and second door DB/2300.

### Exemplary Embodiments - B

As indicated schematically according to an exemplary embodiment as shown schematically in FIGURES 2A-2D, 3A-3I, 4, 5, 6, 7A-7C, 8A-8C, 9A-9B, 10A-10B, 11A-11C, 12, 13A-13C, 14A-14C, 15A-15C, 16A-16B and 17A-17C, a vehicle interior component may comprise a base providing a compartment, a first door movable relative to the base between a closed position and an open position and a second door movable relative to the base between a closed position and an open position. The first door and the second door may be configured for movement between (a) a first state with the first door in the open position of the first door and the second door in the open position of the second door; (b) a second state with the first door in the closed position of the first door and the second door in the open position of the second door; (c) a third state with the first door in the open position of the first door and the second door in the closed position of the second door; (d) a fourth state with the first door in the closed position of the first door and the second door in the closed position of the second door. One of the first door and the second door may be configured to remain in the open position in response to movement of the other of the first door and the second door from the open position to the closed position. The vehicle interior component may comprise a link configured to link movement of the first door and movement of the second door from the closed position to the open position. The link may comprise a link assembly. The link may comprise a first member and a second member. The first member may be configured to move relative to the second member to enable one of the first door and the second door to remain in the open position in response to movement of the other of the first door and the second door from the open position to the closed position. One of the first member and the second member may comprise a recess and the other of the first member and the second member may comprise a projection. The projection may be configured to engage the recess to couple the first member and the second member. At least one of the first member and the second member may be configured to flex to disengage the projection and the recess to enable the first member and the second member to move relative to one another.

| **TABLE B** | |
|---|---|
| **REFERENCE SYMBOL LIST** | |
| **ELEMENT, PART OR COMPONENT** | **REFERENCE SYMBOL** |
| Vehicle | V |
| Interior | I |
| Component | C |
| Instrument Panel | IP |
| Floor Console | FC |
| Actuator/Button | BT |
| Base | B |
| Cover | T |
| First Door | DA |
| Second Door | DB |
| Link | LK |
| Link member | LM |
| Pivot joint | PJ |
| Link connection/point | CL |
| Link default length Dimension | LD |
| Link extended length/Non-Default Length Dimension | LE |
| Link retracted length/Non-Default Length Dimension | LR |
| Detent Mechanism (notch and projection) | DM |
| Spring | SP |
| Latch | LT |
| Spring bar (stiffener) | SF |
| Retainer | RT |
| Spring mechanism (with tab arrangement) | SM |
| Vehicle interior component (shown as a floor console) | C/1000 |
| Base | B/100 |
| First Door | DA/200 |
| Second Door | DB/300 |
| Link | LK/400 |
| Spring | SP/500 |
| Actuator/Button | BT/600 |
| Latch/latch mechanism | LT/700 |
| Pivot (shown as a sleeve) | 104 |
| Attachment Feature | 214 |
| Pivot Arm | 250 |
| Attachment Feature | 314 |
| Pivot Member | 350 |
| First Member (First Arm) | LM/410 |
| Projection/Protrusion | 412 |
| Attachment Feature | 414 |
| Tab | 416 |
| Retainer | RT/418 |
| Second Member (Second Arm) | LM/420 |
| Recess (Indentation/Notch/Depression) | 422 |
| Attachment Feature | 424 |
| Stiffener/Spring (shown as a wire) | 430 |
| Vehicle Interior Component (shown as a floor console) | C/2000 |
| Base | B/2100 |
| First Door | DA/2200 |
| Second Door | DB/2300 |
| Link | LK/2400 |
| Spring | SP/2500 |
| Pivot (shown as a sleeve) | 2104 |
| Attachment Feature | 2214 |
| Pivot Member | 2250 |
| Attachment Feature | 2314 |
| Pivot Member | 2350 |
| First Member (First Arm) | LM/2410 |
| Projection (Protrusion) | 2412 |
| Second Member (Second Arm) | LM/2420 |
| Recess (Indentation/Notch/Depression) | 2422 |
| Stiffener/Spring (shown as a bar/wire spring) | SF/2430 |
| Coupling | 2450 |
| Coupling | 2460 |
| Third Member | 2470 |
| Fourth Member | 2480 |

## Claims

1. A vehicle interior component (C/1000) comprising:
(a) a base (B/100) providing a compartment;
(b) a cover (T) movable relative to the base (B/100) comprising a first door (DA/200) movable between a closed position and an open position and a second door (DB/300) movable between a closed position and an open position; and
(c) a link (LK/400) comprising a length and configured to couple the first door (DA/200) and the second door (DB/300)
wherein the length of the link (LK/400) comprises an effective length between a coupling to the first door (DA/200) and a coupling to the second door (DB/300) charactrized in that the effective length of the link (LK/400) comprises a default length to couple movement of the first door (DA/200) with movement of the second door (DB/300),
wherein the effective length of the link (LK/400) comprises an extended length or a retraced length when the first door (DA/200) is moved independently of the second door (DB/300);
wherein the component comprises a link mechanism comprising the link (LK/400);
wherein the link mechanism comprises a tab (416) and a retainer (RT/418) configured to engage to retain the effective length of the link (LK/400) in the default length;
wherein the tab (416) and the retainer (RT/418) are configured to disengage to allow the effective length of the link (LK/400) to move to a retracted length or the extended length;
wherein the link (LK/400) is configured to flex at the tab (416) and the retainer (RT/418) to disengage to allow the effective length of the link (LK/400) to be moved from the default length.

2. The component (C/1000) of Claim 1 wherein the link (LK/400) comprises a first member (LM, 410) and a second member (LM/420) movable relative to the first member (LM/410).

3. The component (C/1000) of Claim 1 or 2 wherein the second member (LM/420) is configured to extend relative to the first member (LM/410).

4. The component (C/1000) of Claim 3 wherein the second member (LM/420) is configured to retract relative to the first member (LM/410).

5. The component (C/1000) of any one of Claims 1 to 4 further comprising a link mechanism; wherein the link mechanism comprises a wire spring (SF/430); wherein the wire spring is configured to stiffen the link (LK/400).

6. The component (C/1000) of any one of Claims 1 to 5 wherein the link (LK/400) comprises a first member (LM/410) and a second member (LM/420) movable relative to the first member (LM/410) wherein the first member (LM/410) is configured to flex relative to the second member (LM/420).

7. The component (C/1000) of any one of Claims 1 to 5 wherein the link (LK/400) comprises a first member (LM/410) and a second member (LM/420) movable relative to the first member (LM/410); wherein the second member (LM/420) is configured to flex relative to the first member (LM/410).

8. The component (C/1000) of any one of Claims 1 to 7 wherein the link mechanism comprises a cantilever arrangement.

9. The component (C/1000) of any one of Claims 1 to 8 wherein the link (LK/400) is configured to couple movement of the first door (DA/200) from the closed position to the open position and the second door (DB/300) from the closed position to the open position and to decouple movement of the first door (DA/200) from the open position to the closed position and the second door (DB/300) from the open position to the closed position.

## Patentansprüche

1. Fahrzeuginnenausstattungskomponente (C/1000), welche Folgendes aufweist:
(a) eine Basis (B/100), die einen Raum bildet;
(b) eine Abdeckung (T), die relativ zu der Basis (B/100) bewegbar ist und eine erste Tür (DA/200), die zwischen einer geschlossenen Position und einer offenen Position bewegbar ist, und eine zweite Tür (DB/300) aufweist, die zwischen einer geschlossenen Position und einer offenen Position bewegbar ist; und
(c) ein Verbindungselement (LK/400), das eine Länge aufweist und so konfiguriert ist, dass es die erste Tür (DA/200) und die zweite Tür (DB/300) koppelt;
wobei die Länge des Verbindungselements (LK/400) eine wirksame Länge zwischen einer Kupplung an der ersten Tür (DA/200) und einer Kupplung an der zweiten Tür (DB/300) aufweist;
**dadurch gekennzeichnet, dass**
die wirksame Länge des Verbindungselements (LK/400) eine Standardlänge aufweist, um die Bewegung der ersten Tür (DA/200) mit der Bewegung der zweiten Tür (DB/300) zu koppeln,
wobei die wirksame Länge des Verbindungselements (LK/400) eine ausgefahrene Länge oder eine zurückgezogene Länge aufweist, wenn die erste Tür (DA/200) unabhängig von der zweiten Tür (DB/300) bewegt wird; wobei die Komponente einen Verbindungsmechanismus aufweist, der das Verbindungselement (LK/400) aufweist;
wobei der Verbindungsmechanismus eine Lasche (416) und einen Halter (RT/418) aufweist, die so konfiguriert sind, dass sie ineinander greifen, um die wirksame Länge des Verbindungselements (LK/400) in der Standardlänge zu halten;
wobei die Lasche (416) und der Halter (RT/418) so konfiguriert sind, dass sie sich lösen, um zu ermöglichen, dass sich die wirksame Länge des Verbindungselements (LK/400) in eine zurückgezogene Länge oder die ausgefahrene Länge bewegt;
wobei das Verbindungselement (LK/400) so konfiguriert ist, dass es sich an der Lasche (416) und dem Halter (RT/418) biegt, um sich zu lösen, damit die effektive Länge des Verbindungselements (LK/400) aus der Standardlänge bewegt wird.

2. Komponente (C/1000) nach Anspruch 1,
wobei das Verbindungselement (LK/400) ein erstes Element (LM/410) und ein zweites Element (LM/420) aufweist, das relativ zu dem ersten Element (LM/410) bewegbar ist.

3. Komponente (C/1000) nach Anspruch 1 oder 2,
wobei das zweite Element (LM/420) so konfiguriert ist, dass es sich relativ zum ersten Element (LM/410) ausdehnt.

4. Komponente (C/1000) nach Anspruch 3,
wobei das zweite Element (LM/420) so konfiguriert ist, dass es sich relativ zum ersten Element (LM/410) zurückzieht.

5. Komponente (C/1000) nach einem der Ansprüche 1 bis 4,
die ferner einen Verbindungsmechanismus aufweist, wobei der Verbindungsmechanismus eine Drahtfeder (SF/430) aufweist, wobei die Drahtfeder so konfiguriert ist, dass sie das Verbindungselement (LK/400) versteift.

6. Komponente (C/1000) nach einem der Ansprüche 1 bis 5,
wobei das Verbindungselement (LK/400) ein erstes Element (LM/410) und ein zweites Element (LM/420) aufweist, das relativ zu dem ersten Element (LM/410) bewegbar ist, wobei das erste Element (LM/410) so konfiguriert ist, dass es sich relativ zum zweiten Element (LM/420) biegt.

7. Komponente (C/1000) nach einem der Ansprüche 1 bis 5,
wobei das Verbindungselement (LK/400) ein erstes Element (LM/410) und ein zweites Element (LM/420) aufweist, das relativ zu dem ersten Element (LM/410) bewegbar ist, wobei das zweite Element (LM/420) so konfiguriert ist, dass es sich relativ zu dem ersten Element (LM/410) biegt.

8. Komponente (C/1000) nach einem der Ansprüche 1 bis 7,
wobei der Verbindungsmechanismus eine Auslegeranordnung aufweist.

9. Komponente (C/1000) nach einem der Ansprüche 1 bis 8,
wobei das Verbindungselement (LK/400) so konfiguriert ist, dass es die Bewegung der ersten Tür (DA/200) aus der geschlossenen Position in die offene Position und die Bewegung der zweiten Tür (DB/300) aus der geschlossenen Position in die offene Position koppelt und die Bewegung der ersten Tür (DA/200) aus der offenen Position in die geschlossene Position und der zweiten Tür (DB/300/2300) aus der offenen Position in die geschlossene Position entkoppelt.

## Revendications

1. Composant d'intérieur de véhicule (C/1000) comprenant :
(a) une base (B/100) fournissant un compartiment ;
(b) une couverture (T) pouvant être déplacée relativement à la base (B/100) comprenant une première porte (DA/200) pouvant être déplacée entre une position fermée et une position ouverte et une seconde porte (DB/300) pouvant être déplacée entre une position fermée et une position ouverte ; et
(c) une liaison (LK/400) comprenant une longueur et configurée pour coupler la première porte (DA/200) et la seconde porte (DB/300),
dans lequel la longueur de la liaison (LK/400) comprend une longueur effective entre un couplage à la première porte (DA/200) et un couplage à la seconde porte (DB/300),
**caractérisé en ce que**
la longueur effective de la liaison (LK/400) comprend une longueur par défaut pour coupler un déplacement de la première porte (DA/200) à un déplacement de la seconde porte (DB/300),
dans lequel la longueur effective de la liaison (LK/400) comprend une longueur étendue ou une longueur rétractée quand la première porte (DA/200) est déplacée indépendamment de la seconde porte (DB/300) ;
dans lequel le composant comprend un mécanisme de liaison comprenant la liaison (LK/400) ;
dans lequel le mécanisme de liaison comprend une languette (416) et un moyen de retenue (RT/418) configuré pour s'engager pour retenir la longueur effective de la liaison (LK/400) dans la longueur par défaut ;
dans lequel la languette (416) et le moyen de retenue (RT/418) sont configurés pour se désengager pour permettre à la longueur effective de liaison (LK/400) de se déplacer à une longueur rétractée ou à la longueur étendue ;
dans lequel la liaison (LK/400) est configurée pour fléchir au niveau de la languette (416) et du moyen de retenue (RT/418) pour se désengager pour permettre à la longueur effective de la liaison (LK/400) d'être déplacée depuis la longueur par défaut.

2. Composant (C/1000) selon la revendication 1,
dans lequel la liaison (LK/400) comprend un premier élément (LM/410) et un second élément (LM/420) pouvant être déplacé relativement au premier élément (LM/410).

3. Composant (C/1000) selon la revendication 1 ou 2,
dans lequel le second élément (LM/420) est configuré pour s'étendre relativement au premier élément (LM/410).

4. Composant (C/1000) selon la revendication 3,
dans lequel le second élément (LM/420) est configuré pour se rétracter relativement au premier élément (LM/410).

5. Composant (C/1000) selon l'une quelconque des revendications 1 à 4, comprenant en outre un mécanisme de liaison ; dans lequel le mécanisme de liaison comprend un ressort à fil (SF/430) ; dans lequel le ressort à fil est configuré pour raidir la liaison (LK/400).

6. Composant (C/1000) selon l'une quelconque des revendications 1 à 5,
dans lequel la liaison (LK/400) comprend un premier élément (LM/410) et un second élément (LM/420) pouvant être déplacé relativement au premier élément (LM/410), dans lequel le premier élément (LK/410) est configuré pour fléchir relativement au second élément (LM/420).

7. Composant (C/1000) selon l'une quelconque des revendications 1 à 5,
dans lequel la liaison (LK/400) comprend un premier élément (LM/410) et un second élément (LM/420) pouvant être déplacé relativement au premier élément (LM/410) ; dans lequel le second élément (LK/420) est configuré pour fléchir relativement au premier élément (LM/410).

8. Composant (C/1000) selon l'une quelconque des revendications 1 à 7, dans lequel le mécanisme de liaison comprend un agencement en porte-à-faux.

9. Composant (C/1000) selon l'une quelconque des revendications 1 à 8, dans lequel la liaison (LK/400) est configurée pour coupler un déplacement de la première porte (DA/200) depuis la position fermée jusqu'à la position ouverte et de la seconde porte (DB/300) depuis la position fermée jusqu'à la position ouverte, et pour découpler un déplacement de la première porte (DA/200) depuis la position ouverte jusqu'à la position fermée et de la seconde porte (DB/300) depuis la position ouverte jusqu'à la position fermée.
